# EUROPEAN PATENT APPLICATION

(11) **EP 4 822 488 A1**
(43) Date of publication of application: **14.10.2026**
(21) Application number: 26169054.9
(22) Date of filing: 30.03.2026
(51) Int. Cl.: G06F 1/16

(54) **KEYBOARD PROTECTIVE CASE FOR TABLET COMPUTER**

(30) Priority: 30.09.2025 CN 202511432266
(71) Applicant: Shenzhen Tongxin Youpin Technology Co., Ltd., Shenzhen, Guangdong 518100 (CN)
(72) Inventor: Wen, Qingzong, Shenzhen, Guangdong, 518100 (CN)
(74) Representative: Plavsa, Olga

(57) **Abstract**

The present invention provides a keyboard protective case (1) for a tablet computer (8), comprising a keyboard assembly (10) and a support cover (20) that can open or close at a corresponding angle relative to the keyboard assembly (10). The support cover (20) supports the tablet computer (8) and covers the keyboard assembly (10). The keyboard assembly (10) includes a housing (13), a keyboard motherboard (11) arranged in the housing (13) and communicatively connected to the tablet computer, and a plurality of expansion interfaces (12) provided on the keyboard motherboard (11). The housing (13) is formed with a plurality of openings (130) corresponding to the expansion interfaces (12). The expansion interfaces (12) are exposed outside the keyboard assembly (10) through the openings (130) for electrical connection with one or more external electronic devices, thereby enabling data communication between the external electronic devices and the tablet computer (8).

## Description

### TECHNICAL FIELD

The invention relates to the field of tablet computer accessories, and particularly to a keyboard protective case for a tablet computer.

### BACKGROUND

Tablet computers, including tablet devices and e-readers, are widely favored for their portability. To protect such devices and facilitate operation, users typically equip them with keyboard protective cases. A keyboard protective case generally comprises a keyboard and a protective housing, both the tablet computer and the keyboard being receivable within the protective case. During use, a user may perform input and control operations on the tablet computer via the keyboard. After use, the keyboard and the tablet computer may be stored in the protective case.

However, constrained by their inherent size and structural design, conventional keyboard protective cases fail to provide additional expansion connectors (docking stations) on the case itself, leading to inflexible usage of tablet computers and limiting their applicability in various scenarios, such as mouse operation and data transmission.

### SUMMARY

In view of this, the invention provides a keyboard protective case for a tablet computer with a docking station function.

A keyboard protective case for a tablet computer includes a keyboard assembly; and a support cover , capable of being opened to a corresponding angle or closed relative to the keyboard assembly, the support cover being configured to support the tablet computer and cover the keyboard assembly; wherein, the keyboard assembly comprising a housing, a keyboard motherboard being disposed within the housing and in communication connection with the tablet computer, and a plurality of expansion interfaces disposed on the motherboard; a plurality of openings are formed on the housing corresponding to the plurality of expansion interfaces; the plurality of expansion interfaces are exposed outside the keyboard assembly through the plurality of openings to electrical connected with one or more external electronic devices; the plurality of expansion interfaces enable data communication between the one or more external electronic devices and the tablet computer.

The keyboard protective case for a tablet computer described above integrates a plurality of expansion interfaces into the keyboard motherboard, and the keyboard motherboard is exposed from one side of the housing, forming a docking station. This allows external electronic devices to communicate and connect with the tablet computer through the plurality of expansion interfaces, making the use of the tablet computer more flexible and applicable to a wider range of scenarios.

### BRIEF DESCRIPTION OF THE DRAWINGS

To more clearly illustrate the technical solutions in the embodiments of the invention or the prior art, a brief introduction to the drawings required for the description of the embodiments or the prior art will be provided below. It is obvious that the drawings described below are merely some embodiments of the invention, and for those of ordinary skill in the art, other drawings can also be obtained based on the structures shown in these drawings without creative efforts.
FIG. 1 is a perspective view of the keyboard protective case for a tablet computer provided in an embodiment of the present application.
FIG. 2 is a schematic diagram of another state of the keyboard protective case for the tablet computer shown in FIG. 1.
FIG. 3 is a view of the keyboard protective case for the tablet computer shown in FIG. 1 from another angle.
FIG. 4 is a first exploded perspective view of the protective case of the tablet computer shown in FIG. 1.
FIG. 5 is a schematic diagram of the internal structure of the keyboard assembly in the keyboard protective case for the tablet computer shown in FIG. 1 of the present application.
FIG. 6 is a view of the keyboard assembly shown in FIG. 5 from another angle.

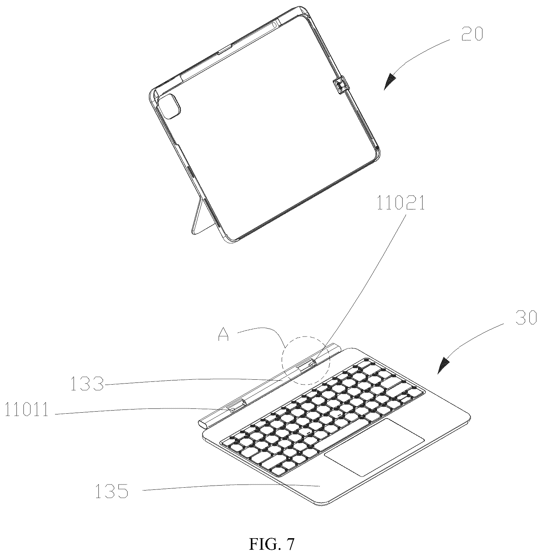

FIG. 7 is a second exploded perspective view of the keyboard protective case for the tablet computer shown in FIG. 1.

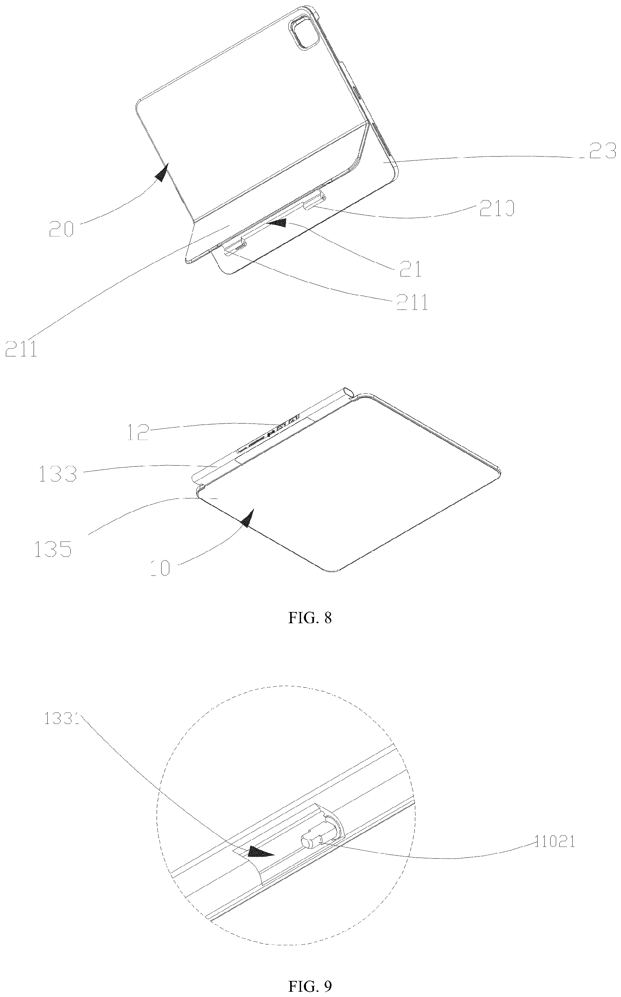

FIG. 8 is a view of the keyboard protective case for the tablet computer shown in FIG. 7 from another angle.
FIG. 9 is an enlarged view of Part A of the keyboard protective case for the tablet computer shown in FIG. 7.
FIG. 10 is a partial structural diagram of the first part of the keyboard protective case for the tablet computer shown in FIG. 1.
FIG. 11 is a reference diagram of the use state of the keyboard protective case for the tablet computer.
FIG. 12 is a third exploded perspective view of the keyboard protective case for the tablet computer shown in FIG. 1.
FIG. 13 is a view of the keyboard protective case for the tablet computer shown in FIG. 11 from another angle.
FIG. 14 is another view of the keyboard protective case for the tablet computer shown in FIG. 1.
FIG. 15 is a cross-sectional view of the keyboard protective case for the tablet computer shown in FIG. 14 along the F-F direction. The realization of the objectives, functional features, and advantages of the invention will be further described in conjunction with the embodiments with reference to the drawings.

### DETAILED DESCRIPTION OF THE EMBODIMENTS

In the description of the invention, it should be understood that terms such as "length," "width," "upper," "lower," "front," "rear," "left," "right," "vertical," "horizontal," "top," "bottom," "inner," and "outer" indicate orientation or positional relationships based on those shown in the accompanying drawings. These are merely for the convenience of describing the invention and simplifying the description, rather than indicating or implying that the referenced device or element must have a specific orientation or be constructed and operated in a specific orientation. Therefore, they should not be construed as limiting the invention.

Furthermore, the terms "first" and "second" are used solely for descriptive purposes and should not be understood as indicating or implying relative importance or implicitly specifying the quantity of the indicated technical features. Thus, features defined with "first" and "second" may explicitly or implicitly include one or more of those features. In the description of the invention, the meaning of "multiple" is two or more, unless otherwise specifically defined.

In the invention, unless otherwise explicitly defined and limited, terms such as "installation," "connection," "connected," and "fixed" should be broadly understood. For example, they may refer to a fixed connection, a detachable connection, or an integral whole; they may be a mechanical connection or an electrical connection; they may be directly connected or indirectly connected through an intermediary; they may be the internal communication between two elements or the interaction relationship between two elements. For those of ordinary skill in the art, the specific meanings of these terms in the invention can be understood based on the specific circumstances.

To provide a clearer and more accurate understanding of the content of the invention, it will now be described in detail with reference to the accompanying drawings. The accompanying drawings illustrate examples of embodiments of the invention, where identical reference numerals indicate identical elements. It should be understood that the proportions shown in the accompanying drawings are not the actual implementation proportions of the invention; they are merely for illustrative purposes and are not drawn to original size.

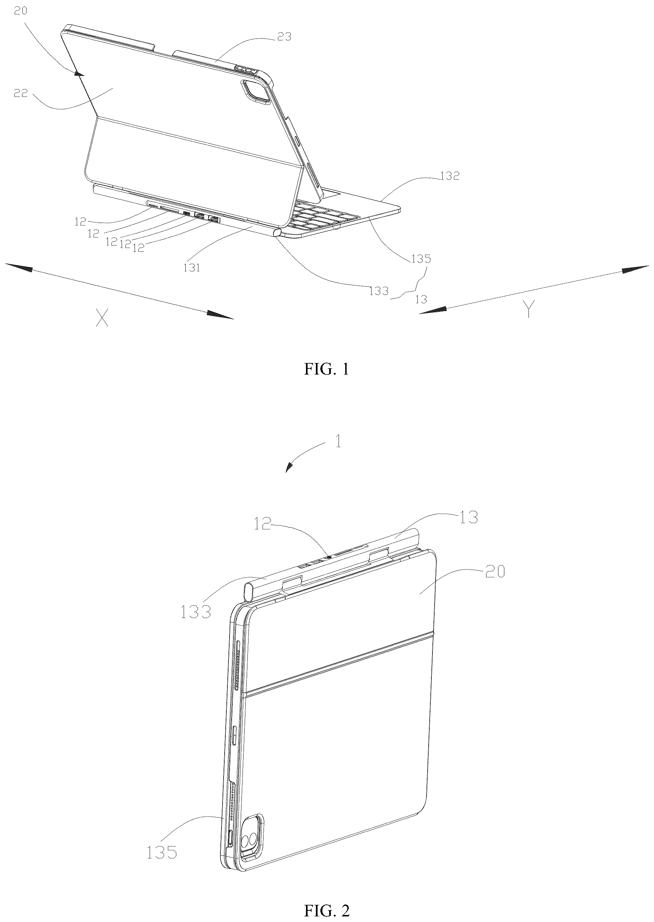

Referring to FIGs. 1-4, a keyboard protective case 1 for a tablet computer provided in an embodiment of this invention. The keyboard protective case 1 for a tablet computer includes a keyboard assembly 10, a support cover 20 that capable of opening to a corresponding angle or closing relative to the keyboard assembly 10, and an electrical connection assembly 30. The support cover 20 is configured to support the tablet computer 8 and cover the keyboard assembly 10. The electrical connection assembly 30 enables communication connection between the keyboard assembly 10 and the tablet computer 8.

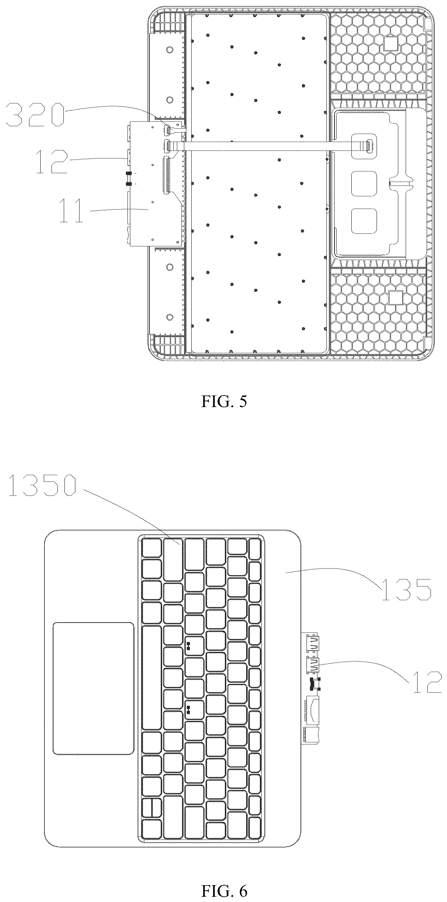

Referring to FIGs. 5-6, the keyboard assembly 10 includes a housing 13, a keyboard motherboard 11 being disposed within the housing 13 and being in communication connection with the tablet computer 8, and a plurality of expansion interfaces 12 being disposed on the keyboard motherboard 11. The housing 13 further defines a plurality of openings 130 corresponding to the plurality of expansion interfaces 12. The plurality of expansion interfaces 12 (also referred to as one or more docking stations) are exposed outside the keyboard assembly 10 through the plurality of openings 130 for electrical connection with one or more external electronic devices (not shown). In this manner, the plurality of expansion interfaces 12 enable data communication between the one or more external electronic devices and the tablet computer 8. Specifically, the communication connection between the keyboard assembly 10 and the tablet computer 8 is established via the electrical connection assembly 3. The specific manner in which the electrical connection assembly 30 establishes the communication connection between the tablet computer 8 and the keyboard motherboard 11 will be described in detail below.

In this embodiment, the expansion interfaces 12 may be data transmission interfaces such as USB connectors, Type C connectors, SD/TF card slots, charging interfaces, or audio interfaces. In some alternative embodiments, when a computing power of the keyboard motherboard 11 and the tablet computer reaches a higher level, the expansion dock 12 may also include video output interfaces such as HDMI connectors, VGA connectors, DP connectors, or may also include network interfaces, such as Ethernet connectors.

The housing 13 includes a first side 131 and a second side 132 disposed opposite to the first side 131. The first side 131 is disposed adjacent to a junction between the support cover 20 and the keyboard assembly 10. The second side 132 is the side at where the keyboard assembly 10 is completely separated from the support cover 20 when the support cover 20 is pivoted open relative to the keyboard assembly 10. The plurality of expansion interfaces 12 are disposed on the first side 131. That is, the first side 131 is a rear side of the keyboard assembly 10, and the second side 132 is a front side of the keyboard assembly 10.

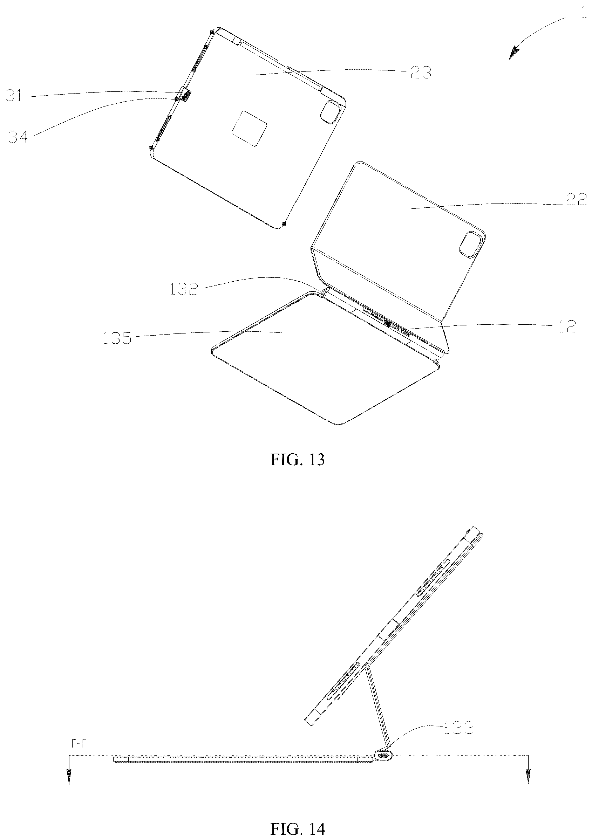

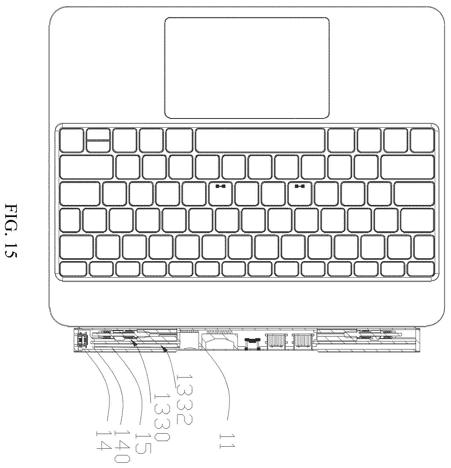

Referring to FIGs. 14-15, the first part 133 has a hollow interior structure and is substantially rectangular block-shaped. A rotating support shaft 137 is disposed on the first part 133, and includes a first rotating support shaft 1371 and a second rotating support shaft 1372 spaced apart from each other along the length direction of the first part 133 (i.e., a first direction X). The first rotating support shaft 1371 and the second rotating support shaft 1372 are arranged symmetrically about a midline of the first part 133 and are respectively disposed adjacent to the two ends of the first part 133. Two notches 1331 are formed at two positions of the first part 133 corresponding to the first rotating support shaft 1371 and the second rotating support shaft 1372 respectively, such that the first rotating support shaft 1371 and the second rotating support shaft 1372 are partially exposed. The first rotating support shaft 1371 and the second rotating support shaft 1372 respectively include a first free end 11011 and a second free end 11021 located within the corresponding notches 1331. Two symmetrically arranged fixing portions 138 are also provided on a side of the first part 133 opposite to the first side 131, and the first part 133 is fixed to the second part 135 through the two fixing portions 138.

The first part 133 is further provided with a charging interface 14, a first space 1330 and a second space 1332, and the first space 1330 and the second space 1332 are spaced apart from each other. The second space 1332 is located on the side of the first space 133 away from the second part 135. The rotating support shaft 137 is located in the first space 1330.

The charging interface 14 of the first part 133 includes a charging sub-board 140 electrically connected to the keyboard motherboard 11 via a first wire 15. The charging sub-board 140 is configured to charge external electronic devices and the tablet computer 8. In this embodiment, the first wire 15 is a flexible flat cable. In some alternative embodiments, the first wire 15 may alternatively be a flexible circuit board (FPC) or other types suitable electrical conductive terminal. The first wire 15 is disposed along the first direction X and is received in the second space 1332.

The second part 135 is substantially rectangular shaped. A length of the second part 135 is substantially the same as that of the first part 133, and a width of the second part 135 (i.e., a second direction Y) is larger than that of the first part 133. A key assembly 1350 is disposed on the second part 135. The key assembly 1350 is configured for a user to perform input operations and to trigger the keyboard motherboard 11 to input corresponding operation instructions to the tablet computer 8. A rotating member 21 is disposed on the support cover 20, and the support cover 20 is rotatably coupled to the rotating support shaft 137 via the mating engagement of the rotating member 21, such that the support cover 20 can be opened to a corresponding angle or closed relative to the keyboard assembly 10. The rotating member 21 includes a first rotating portion 210 and a second rotating portion 211 that are spaced apart and disposed on the support cover 20. One end of each the first rotating portion 210 and the second rotating portion 211 is fixed within the support cover 20, and the other ends are passed through the corresponding notches 1331 and respectively fitted over the first rotating support shaft 1371 and the second rotating support shaft 1372 from the first free end 11011 and the second free end 11021. Accordingly. the first rotating portion 210 and the second rotating portion 211 are rotatably coupled to the first rotating support shaft 1371 and the second rotating support shaft 1372, respectively, and the second rotating portion 211 is disposed adjacent to the charging interface 14. The rotating member 21 is also located in the first space 1330, such that the first wire 15 and the rotating member 21 are spatially separate, thereby preventing the first wire 15 from being damaged by interference with the second rotating portion 211 during movement.

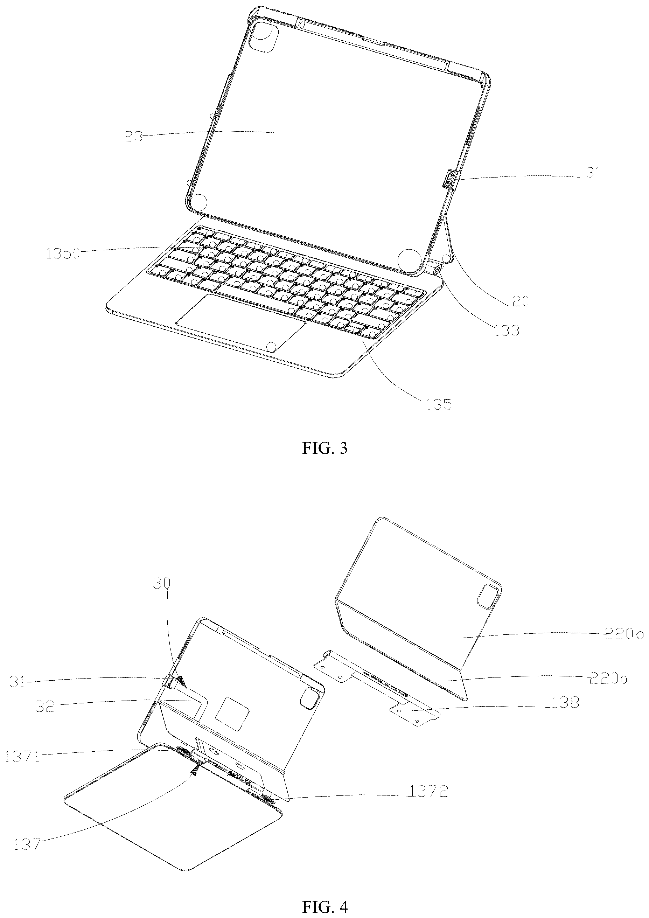

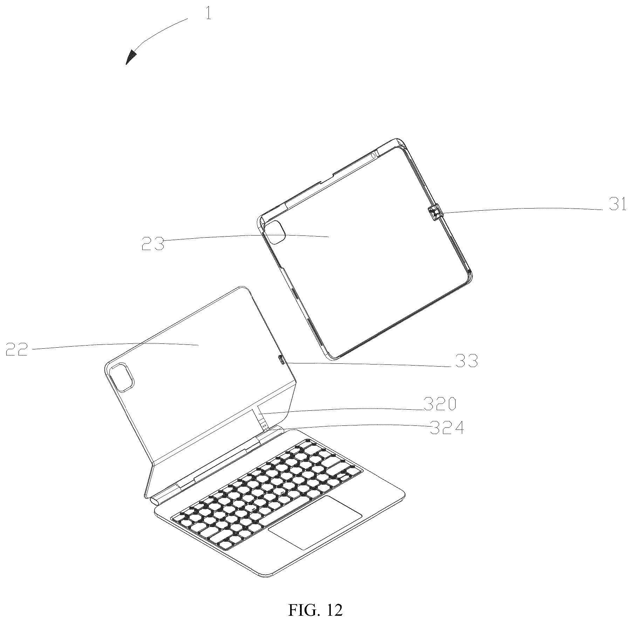

Referring to FIGs. 4-5 and FIGs. 12-13, the support cover 20 further, includes a support plate 22 and a protective shell 23 detachably coupled to the support plate 22. The support plate 22 is a plate-shaped. The protective shell 23 is configured as a frame shell. The support cover 20 secures the tablet computer 8 to the support cover 20 via the protective shell 23 and is supported by the support plate 22. In this embodiment, the support plate 22 includes two mutually foldable portions, such that the support angle of the tablet computer 8 is adjustable.

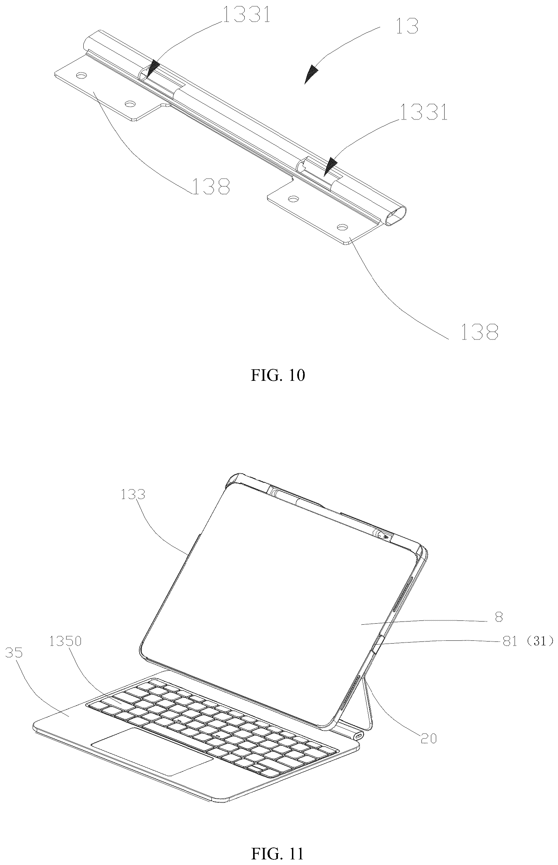

Referring to FIG. 11, the electrical connection assembly 30 establishes a wired communication connection between the keyboard assembly 10 and the tablet computer 8. The electrical connection assembly 30 includes a main connector 31 mated with a communication interface 81 of the tablet computer 8, a second wire 32 electrically connected between the keyboard motherboard 11 and a main connector 31, and a plurality of first conductive terminal 33 and a plurality of second conductive terminal 34 that electrically coupled the main connector 31 and the second wire 32. In this embodiment, the second wire 32 is the same as the first wire. It will be appreciated that in some alternative embodiments, the second wire 32 may also be a flexible circuit board (FPC) or other suitable electrical conductive terminal.

The plurality of first conductive terminal 33 are disposed on the support plate 22. The main connector 31 is arranged on the protective shell 23, and the plurality of second conductive terminal 34 are provided on the main connector 31 and electrically connected thereto. When the protective shell 23 is assembled with the support plate 22, the plurality of second conductive terminal 34 are coupled with the plurality of first conductive terminal 33 in a one-to-one manner to establish electrical conduction therebetween. In the present embodiment, the plurality of first conductive terminal 33 are conductive pins, and the plurality of second conductive terminal 34 are contact pads.

It will be appreciated that in other embodiments, if the support cover 20 is formed as an integral, non-separable structure, the plurality of first conductive terminals 33 and second conductive terminals 34 may be omitted, and the main connector 31 and the keyboard motherboard 11 may be directly connected via the second wire 32.

One end of the second wire 32 is connected to the first conductive terminal 33, and the other end is connected to the keyboard motherboard 11. The second wire 32 includes a first section 320 disposed within the keyboard assembly 10, a second section 322 disposed within the support cover 20, and a third section 324 disposed within the rotating member 21, with the third section 324 located between the first section 320 and the second section 322. The second wire 32 is integrally formed; that is, the first section 320, the second section 322, and the third section 324 constitute a single unitary body. In the present embodiment, when the support cover 20 is in the closed state, the first section 320 and the second section 322 are arranged in parallel, and the third section 324 extends from the support cover 20 to the keyboard assembly 10 around the rotating member 21. This routing configuration of the second wire 32 prevents damage thereto caused by rotation of the support cover 20.

The keyboard protective case for a tablet computer according to the embodiments described above forms the docking station by integrating a plurality of expansion interfaces onto the keyboard motherboard, with the keyboard motherboard exposed at one side of the housing. The external electronic devices may thereby establish communication connections with the tablet computer via the plurality of expansion interfaces, allowing more flexible usage of the tablet computer and expanding its applicable scenarios. Furthermore, the keyboard motherboard and the tablet computer are connected in a wired manner through an electrical connection assembly, thereby ensuring more stable signal or data transmission therebetween. In addition, a wired connection is also adopted between the keyboard motherboard and the charging port, providing relatively stable charging and discharging for the tablet computer.

Obviously, those skilled in the art may make various modifications and variations to the invention without departing from the spirit and scope of the invention. Thus, if these modifications and variations of the invention fall within the scope of the claims of the invention and their equivalent technologies, the invention is also intended to encompass these modifications and variations.

The examples listed above are merely preferred embodiments of the invention. Of course, they cannot be used to limit the scope of rights of the invention. Therefore, equivalent changes made in accordance with the claims of the invention still fall within the scope covered by the invention.

## Claims

1. A keyboard protective case (1) for a tablet computer (8), comprising:
a keyboard assembly (10); and
a support cover (20), capable of being opened to a corresponding angle or closed relative to the keyboard assembly (10), the support cover (20) being configured to support the tablet computer (8) and cover the keyboard assembly (10);
wherein, the keyboard assembly (10) comprising a housing (13), a keyboard motherboard (11) being disposed within the housing(13) and in communication connection with the tablet computer (8), and a plurality of expansion interfaces (12) disposed on the motherboard (11); a plurality of openings (13) are formed on the housing (13) corresponding to the plurality of expansion interfaces (12); the plurality of expansion interfaces (12) are exposed outside the keyboard assembly (10) through the plurality of openings (13) to electrical connected with one or more external electronic devices; the plurality of expansion interfaces (12) enable data communication between the one or more external electronic devices and the tablet computer (8).

2. The keyboard protective case (1) for the tablet computer (8) of claim 1, wherein the housing includes a first side (131) and a second side (132) opposite to the first side (131), the first side (131) is disposed adjacent to a junction between the support cover (20) and the keyboard assembly (10), the second side (132) is the side at which the keyboard assembly (10) is completely separated from the support cover (20) when the support cover is opened relative to the keyboard assembly(10), the plurality of expansion interfaces (12) are disposed on the first side (131).

3. The keyboard protective case (1) for the tablet computer (8) of claim 2, wherein the housing includes a first part (133) and a second part (135) connected to one side of the first part (133), the first part (133) is rotatably coupled to the support cover (12), a key assembly (1350) is disposed on the second part (135), the first side (131) is located on the first part (133) and is away from the second part (135); the second side (132) is located on the second part (132) and is away from the first part (133).

4. The keyboard protective case (1) for the tablet computer (8) of claim 3, wherein a charging interface is disposed on one end of the first part (133), the charging interface (14) includes a charging sub-board (140) electrically connected with the keyboard motherboard (11) via a first wire (15), thereby enabling charging and discharging of the tablet computer (8).

5. The keyboard protective case (1) for the tablet computer (8) of claim 4, wherein a rotating support shaft (137) is disposed on the first part (133), a rotating member (21) is disposed on the support cover (20); one end of the rotating member (21) is fixed to the support cover (20), and the other end is rotatably coupled to the rotating support shaft (137), enabling the support cover (20) to be opened or closed by rotating relative to the keyboard assembly (10).

6. The keyboard protective case (1) for the tablet computer (8) of claim 5, wherein the rotating support shaft (137) includes a first rotating support shaft (1371) and a second rotating support shaft (1372) arranged at intervals, the rotating member (21) includes a first rotating part (210) and a second rotating part (211) arranged at intervals; notches (1331) are formed on the first part (133) corresponding to the first rotating part (210) and the second rotating part (211); the first rotating support shaft (210) and the second rotating support shaft (211) are located within the notches and are rotatably coupled to the first rotating part (210) and the second rotating part (211).

7. The keyboard protective case (1) for the tablet computer (8) of claim 5, wherein the keyboard motherboard (11) is installed on the second part (135) and partially extends to the first part (133).

8. The keyboard protective case (1) for the tablet computer (8) of claim 5, wherein an electrical connection assembly (30) is disposed on the keyboard protective case (1) for the tablet computer (8), and is configured to establish a wired connection between the keyboard motherboard (11) and the tablet computer (8).

9. The keyboard protective case (1) for the tablet computer (8) of claim 8, wherein the electrical connection assembly (30) includes a main connector (31) electrically coupled to a communication interface (81) of the tablet computer (8), a second wire (32) that is electrically connected between the keyboard motherboard and the main connector.

10. The keyboard protective case (1) for the tablet computer (8) of claim 9, wherein the electrical connection assembly (30) further includes a plurality of first conductive terminal (33) and a plurality of second conductive terminal (33), the support cover (20) includes a support plate (22) and a protective shell (22) detachably coupled to the support plate (22), the rotating member (21) is fixed to the support plate (22) to couple the support plate (22) to the keyboard assembly (10); the protective shell (23) and the support plate (22) are detachably assembled and supported by the support plate (22); the plurality of first conductive terminal (33) are disposed on the support plate (22), and the plurality of second conductive terminal (34) are disposed on the protective shell (23); the plurality of first conductive terminal (33) and the plurality of second conductive terminal (34) are in one-to-one electrical contact; one end of the second wire (32) is connected to the first conductive terminal (33), and the other end is connected to the keyboard motherboard (11).

11. The keyboard protective case (1) for the tablet computer (8) of claim 10, wherein the second wire (32) includes a first section (320) disposed within the keyboard assembly, a second section (322) disposed within the support cover (21) , and a third section (324) disposed within the rotating member (21) the third section (324) is located between the first section (320) and the second section (322), the second wire is of an integral structure; the first section (320) and the second section (322) are arranged in parallel; the third section (324) winds around the rotating member (21) from the support cover (20) to the keyboard assembly (10).
